# EUROPEAN PATENT SPECIFICATION

(11) **EP 0 251 557 B1**
(45) Date of publication and mention of the grant of the patent: **06.10.1993**
(21) Application number: 87305330.0
(22) Date of filing: 16.06.1987
(51) Int. Cl.: H01R 25/16, H02B 1/20

(54) **Bus bar connector assembly**
Verbindungsmontierung für Sammelschienenleiter
Assemblage de connexions pour barres omnibus

(30) Priority: 30.06.1986 US 880238; 30.06.1986 US 880231
(43) Date of publication of application: 07.01.1988
(73) Proprietor: THE WHITAKER CORPORATION, Wilmington, Delaware 19808 (US)
(72) Inventor: Feher, Michael Scott, Steelton Pennsylvania 17113 (US); Weidler, Charles Harry, Lancaster Pennsylvania 17603 (US); Wise, James Henry, Palmyra Pennsylvania 17078 (US)
(74) Representative: Warren, Keith Stanley

(56) References cited:
- FR-A- 2 390 029
- US-A- 3 431 545
- US-A- 4 082 393

## Description

This invention relates to an electrical bus bar connector assembly, and also relates to an electrical receptacle for use in such an assembly.

Such an assembly may comprise a frame, in which a bus bar is fixedly mounted, an electrical module, for example, a drawer mounted power supply unit, being slidable in the frame towards and away from the bus bar, and having means for connecting circuitry in the module with the bus bar, for the supply of power to the bus bar. The electrical circuitry of such a module may be constituted, for example, by printed circuit boards mounted in superposition in the module. Conventionally, an electrical lead extending from the module has been secured to the bus bar by means of bolts, to connect the circuitry to its bus bar. The disconnection of the module from the bus bar, in order to allow repair work to be carried out on the module, and its subsequent reconnection to the bus bar were, therefore, time consuming, and further, the threaded connection between the lead and the bus bar was subjected to temperature cycling by reason of the heat generated by the module, so as to loosen the bolt as a result of differential expansion between the metal of the bolt and that of the bus bar, thereby necessitating periodical readjustment of the bolt.

The present invention consists in a bus bar connector assembly as claimed in claim 1.

In the absence of the guide fork recited in claim 1, the receptacle could, as a result of said play, butt against the bus bar, instead of mating therewith, with consequent damage to the receptacle, and possibly also the bus bar.

Preferably, the receptacle and the guide fork are mounted to the unit to float transversely of the direction of movement of the module to allow the guide fork to take up the said play.

Conveniently, the receptacle is mounted to the guide fork through a stepped support structure from which spring contacts of the receptacle project, the guide fork being carried by a stepped support plate which is complementary with said support structure and interfits therewith, the support plate also interfitting with a rectangular slide block to which the support structure and the support plate of the guide fork are secured in stacked relationship, for example by means of bolts passed through flanges projecting from the support structure. The slide block may be mounted on rails carried by a pair of spaced cheeks fixed to the module, for sliding movement substantially at right angles to the direction of movement of the module.

US-A-3 431 545 AND US-A-4 082 393 both disclose a bus bar connector assembly comprising spring arm contacts on electrical modules, for gripping a bus bar.

Embodiments of the present invention will now be described by way of example with reference to the accompanying drawings, in which:
Figure 1 is a perspective view, with parts removed, of a rack frame including an electrical bus bar connector assembly;
Figure 2 is an enlarged perspective view showing details of the connector assembly of Figure 1;
Figure 3 is a perspective exploded view of the details shown in Figure 2;
Figure 4 is a perspective view of a first alternative example of fork contact;
Figure 5 is a perspective view of a first alternative example of fork contact shown in Figure 4 assembled with an alternative guide and mounted on an end of a bus bar;
Figure 6 is an enlarged perspective view showing another example of connector assembly;
Figure 7 is an exploded perspective view of the connector assembly of Figure 6; and
Figure 8 is a similar view to that of Figure 4 but showing the terminal contact in a fully assembled condition.

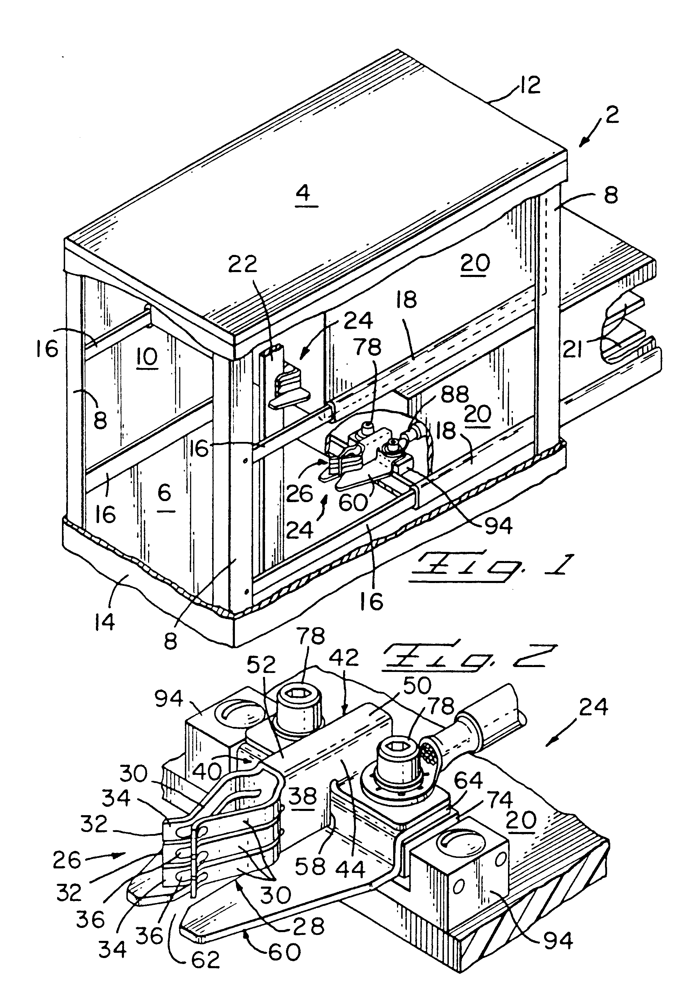

As shown in Figure 1, the rack frame 2 has a roof 4 and a base 6 connected by vertical uprights 8, and side walls 10 (only one of which is shown). The frame 2 has a first end 12 and a second end 14, horizontal vertically-spaced rails 16 spanning the uprights 8 and extending between said ends. Mounted on gibs 18 engaged about the rails 16, for sliding movement towards and away from said first end 14, are superposed electrical modules 20 containing circuit boards 21 carrying the circuitry of a power supply unit. Proximate to the end 14 of the frame 2 is a vertical bus bar 22 providing a common power supply conductor for the slidable modules 20. Each module 20 has secured to its end nearest to the end 14 of frame 2, an electrical receptacle stack 24 for mating with the bus bar 22. The upper module 20 is shown in Figure 1 in a position in which it has been advanced towards the end 14 of the frame 2 to mate its receptacle stack 24 with the bus bar 22, the lower module 20 being shown in a position in which it is withdrawn from the end 14 of the frame 2.

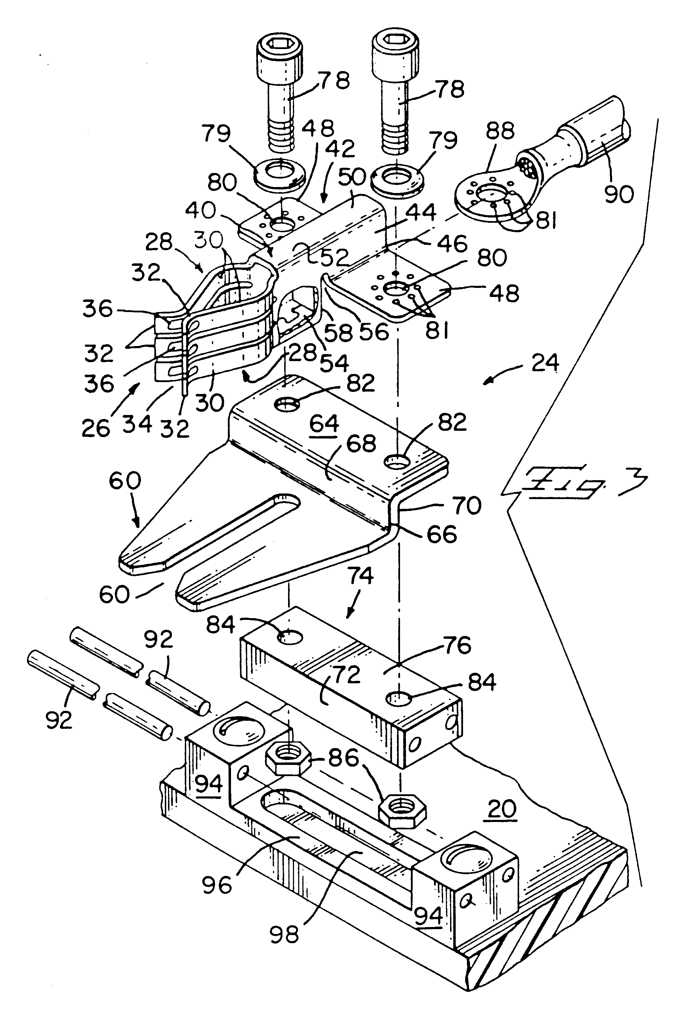

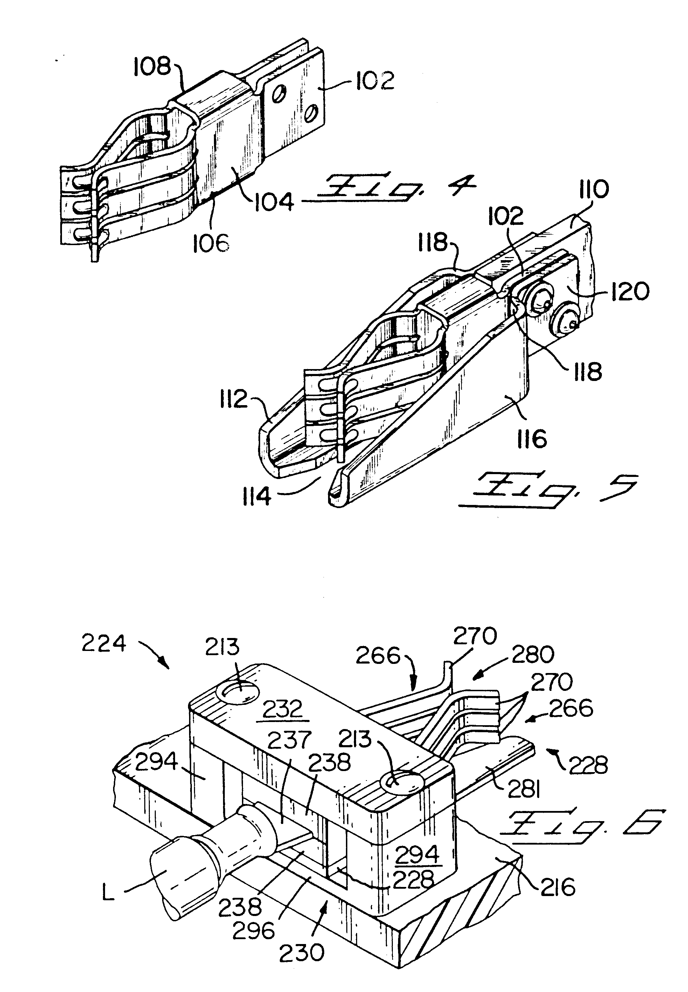

As shown in Figures 2 and 3, each stack 24 comprises an electrical receptacle 26 having a set of three superposed tulip-shaped contacts 28, each comprising a pair of spring contact arms 30, the contacts 28 being symmetrical about a common vertical plane. Proximate to their free ends 32, the contact arms 30 of each pair define a bus bar receiving mouth 34 intersected by said plane, the arms 30 of each contact 28 having opposed, bus bar engaging, contact surfaces 36. Each am 30 is formed integrally at its end opposite to its free end 32, with a box-shaped, tubular, contact support structure 40 which is in turn formed integrally with a flange support structure 42 from the lower edges 46 of side walls 44 of which project coplanar mounting flanges 48, the side walls 46 extending from a base 50 of the structure 40. The side walls 38 of the structure 40 are of equal height and constitute major side walls of the structure 40, these being connected by upper and lower minor walls 52 and 54, respectively. The wall 52 merges with the base 50 of the support structure 42 which is U-shaped as seen in cross section. The walls 38 are of considerably greater height than the walls 44 so that the structure 40 presents a shoulder 58 below the flanges 48. The receptacle 28 and the structures 40 and 42 have been stamped and formed from a single piece of sheet metal, edge portions of which have been secured together to form the wall 54, by means of a tongue and slot connection, as shown in Figure 3.

The stack 24 further comprises a guide fork 60 having a receptacle guiding mouth 62 projecting, as shown in Figures 1 and 2, beyond the free ends 32 of the spring arms 30, towards the end 14 of the frame 2. The fork 60 is formed integrally with a guide fork support plate 64 to which it is connected by way of a vertical step 66. The shoulder 58 of the structure 40 engages one side 68 of the step 66, the other side 70 of the step 66 being in surface-to-surface engagement with a front surface 72 of a slide block 74, the upper surface 76 of which is engaged by the support plate 64. The receptacle 26, the fork 60, and the block 74 are fixedly connected together in vertically superposed relationship, by means of bolts 78 which extend through mounting holes 80 in the flanges 48, mounting holes 82 in the plate 64, and mounting holes 84 in the slide block 74, and on which bolts, nuts 86 have been threaded and tightened. One of the bolts 78 also passes through a ring tongue terminal 88 crimped to a lead 90, to connect the receptacle 26 to the circuitry of the corresponding module 20. The bolts 78 are provided with Belville lock washers 79 to maintain the integrity of connection between the receptacle 26, the fork 60 and the block 74 as well as the integrity of the interface between the terminal 88 and the corresponding flange 48 of the receptacle 26. The terminal 88 and the said flange 48 are provided with antirotation bosses 81, to restrain relative rotation therebetween.

The slide block 74 is mounted on rails 92 extending through spaced cheeks 94 bolted to the corresponding module 20, and being connected by a web 96. The nuts 86 are received in a slot 98 and the web 96 extends parallel with the rails 92. The block 74 is capable of floating sliding movement along the rails 92, in a direction at right angles to the rails 16 of the frame 2, to an extent limited by the cheeks 94.

When a module 20 is to be connected to the bus bar 22, it is slid along the respective rails 16, towards the end 14 of the frame 2, so that the bus bar 22 is received in the mouth 62 of the fork 60 despite play between the rails 16 and the corresponding gibs 18, whereby the receptacle 26 is guided with respect to the bus bar 22, so that the latter is received in the mouths 34 of the contacts 28 and then between the contact surfaces 36 of the receptacle 26 as the module 20 reaches its home position in the frame 2. Each module 20 is accordingly rapidly connectable to the bus bar 22, damage to the receptacle 26 or to the bus bar being avoided by reason of the guiding action of the guide fork 60 and the slidability of the block 74.

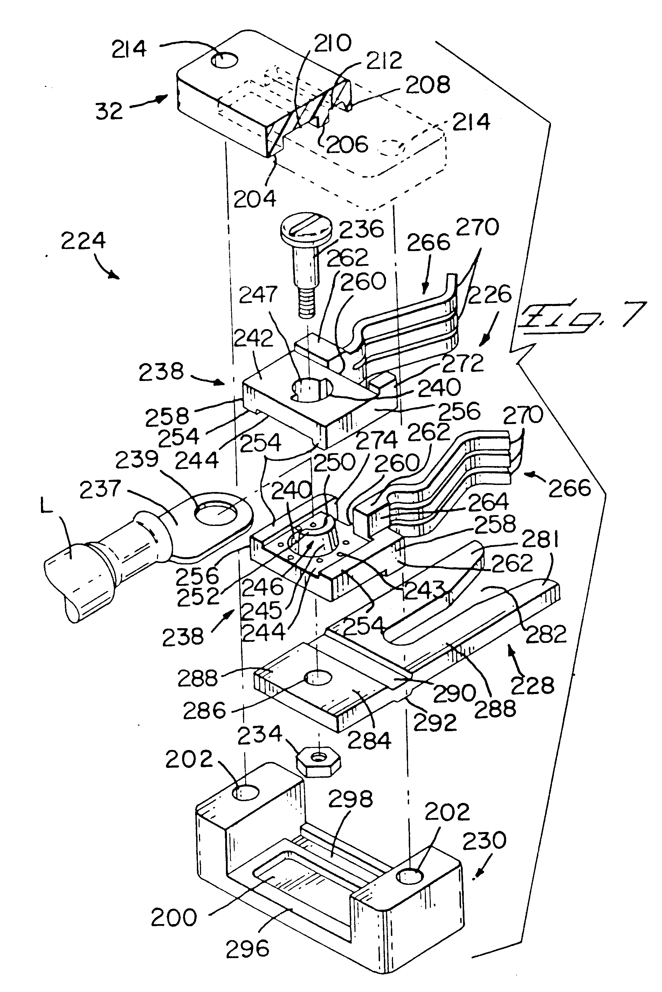

In an alternative example shown in Figures 4 and 5, mounting flanges 102 project rearwardly in parallel relation from opposite major side walls 104 of a box-shaped, tubular contact support structure 106 of spring contact 108, enabling them to be secured to an end of a bus bar 110 or other suitable structure received between them and extending in a vertical plane. In this example, guide fork 112 is bent into channel form with the guiding mouth 114 extending into the channel base and the channel walls 116 being of increasing height as they extend towards a rear where portions 118 are bent in towards each other. Supporting plates or mounting flanges 120 project rearwardly in parallel relation from free inner ends of the portions 118 for securing to the mounting flanges 102 and bus bar 110 received between them.

In the example shown in Figures 6-8, each assembly 224 comprises an electrical terminal 226, a guide fork 228, a slideway 230, a slideway cover 232, a fastener in the form of a nut and bolt 234 and 236, respectively, and an electrical contact element in the form of a ring tongue 237 crimped to an electrical lead L.

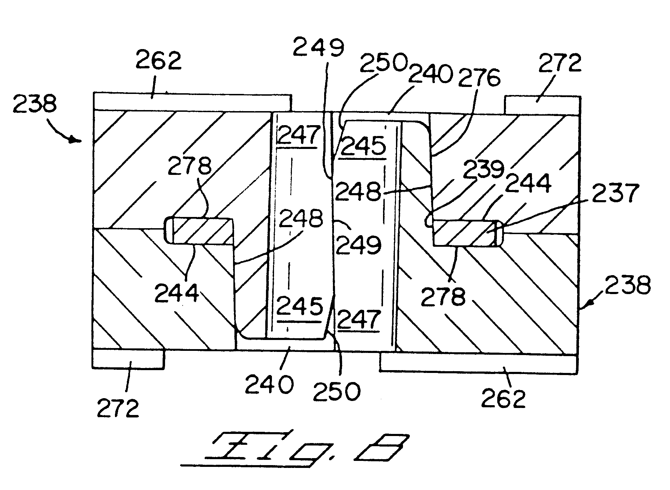

The terminal 226 comprises a pair of identical cast metal plates 238. Each plate 238 has a central through-aperture 240 opening into opposite faces 242 and 244 of the plate 238. As shown in Figure 7, the face 224 may be formed with tolerance take-up bosses 243. A shaft component in the form of a semicircular cross section shaft segment 246 has a first portion 245, outstanding from the face 244, and a second portion 247 providing a segment of the periphery of the aperture 240 of the plate 238 as shown in Figure 8. The radially outer face 248 of the portion 245 of each shaft segment 246 tapers slightly away from the face 244. The longitudinal edges 249 of each portion 245 have chamfered surfaces 250 proximate to a free end 252 of the portion 245, which is remote from the face 244 of the plate 238. The wall 276 of each aperture 240, which wall is opposite to the portion 247 of the segment 246 tapers away from the face 244. On either side of the aperture 240, each plate 238 is formed with a standoff rudimentary wall 254, these walls extending in parallel relationship along opposite edges 256 and 258 of the plate 238. From a forward edge 260 of the plate 238, which edge is adjacent to the edges 256 and 258 thereof, there projects a contact spring base block 262 having a lateral abutment face 264, the block 262 being positioned towards one side of the aperture 240. From each block 262 extends an array 266 of superposed contact springs 270. There also projects from the edge 260, on the opposite side of the aperture 240, to the block 262, an abutment block 272 having an inner abutment face 274.

The terminal 226 is assembled to the ring tongue 237 by inserting the portion 245 of the shaft segment 246 of one of the plates 238, through the hole 239 in the ring tongue 237 and then mating the two plates 238 by inserting the portion 245 of the shaft segment 246 of one plate 238 into the aperture 240 of the other plate. During the mating operation, the chamfered surfaces 250 of the shaft segments 246 engage one another thereby guiding the shaft segments 246 into sliding engagement with one another along their longitudinal edges 249, so that each portion 245 is force fitted (Figure 8), by virtue of the taper of its outer face 248, between the other shaft segment 246 and the opposite wall 276 of the aperture 240 of the other plate 238, which wall 276 is tapered complementarily with the face 248 of the one plate 238. In the fully mated or assembled position in which they are shown in Figure 8, the two shaft segments 246 provide a hollow shaft for receiving a fastener, as described below. By virtue of the provision of the rudimentary walls 254, the ring tongue 237 is accommodated in said fully mated condition of the plates 238, in spaces 278 between the surfaces 244 of the two plates 238. The walls 254 are of such height that the ring tongue 237 is firmly engaged between the faces 244 in full surface-to-surface engagement therewith. Also in the fully mated condition of the plates 238, the abutment face 274 of the block 272 of each plate 238 engages against the abutment face 264 of the block 262 of the other plate 238 thereby preventing relative rotation of the plates 238 about the apertures 240. The abutment faces 264 and 274 are shown in Figure 7. Furthermore, in said fully mated position, the arrays 266 of contact springs 270 cooperate to define a tulip-shaped bus bar receptacle 280, as shown in Figure 6. The bosses 243, where such need to be provided, take up tolerances between the terminal 226 and the ring tongue 237 so that the latter is in firm surface-to-surface contact with both of the faces 244.

The fork 228 has tines 281 defining a flared receptacle guiding mouth 282, the tines 281 extending from a guide fork support plate 284 provided with a fastener receiving through-hole 286, the plate 284 having in one face 288 thereof a transverse groove 290 and in the opposite face thereof a transverse rib 292 coterminous with the groove 290.

The slideway 230 comprises a pair of spaced cheeks 94 connected by a web 296 having a slideway groove 98 extending between the cheeks 294 and being formed with a nut-receiving opening 200 beside the groove 298. Each cheek 94 has a vertical opening 202.

The cover 32 has, on its underside, ribs 204, 206 and 208 defining slideway grooves 210 and 212.

The terminal 226 having been assembled to the ring tongue 237 as described above, the terminal 226 is assembled to the fork 28 by inserting the parts of the blocks 262 and 272 which project below the surface 242 of the lower plate 238 into the groove 290 in the fork 228, passing the screw 236 through the said hollow shaft provided by the shaft segments 246 of the plates 238, and the opening 286 of the fork 228 and screwing the nut 234 home on the screw 236 to connect together the terminal 226 and the fork 228 in superposed, fixed relationship. The rib 292 of the fork 228 is then inserted into the groove 298 of the web 296, of the slideway 230, the nut 234 being received in the opening 200 of the web 296 and the cover 232 is placed on the cheeks 294 so that the parts of the blocks 262 and 272 projecting from the face 242 of the upper plate 238 are received in the groove 208 of the cover 232, the head of the screw 236 being received in the groove 210 of the cover 232. Screws 213 (Figure 6) are then passed through holes 214 in the cover 232 and the openings 202 in the cheeks 294 and are screwed into tapped holes (not shown) in a base plate 216 of the corresponding module 220 so that the connector assembly 224, assembled as shown in Figure 6, is secured to the plate 216.

In this assembled condition of the assembly 224, the tines 281 of the fork 228 project beyond the free ends of the contact springs 270 of the array 266, towards the bus bar 22.

The portions of the block 262 and of the block 272, which are received in the slideway groove 212 of the cover 232, and the head of the bolt 236 which is received in the slideway groove 210 of the cover 232 are slidable along these slideways, the nut 234 being movable along the opening 200 in the web 296. The terminal 226 and the fork 228 which is fixed thereto are accordingly free to slide at right angles to the rails 16, to an extent limited by the cheeks 294 of the slideway 230.

By virtue of the forced fit between the two plates 238, the integrity of the connection between the ring tongue 237 and the terminal 226 is undisturbed by temperature fluctuations.

The ring tongue 237 may be formed with bosses similar to the bosses 243 and for the same purpose, and/or the ring tongue 237 may be made in the form of an arcuate cross section lock washer.

## Claims

1. A bus bar connector assembly comprising a frame (2); a bus bar (22) fixedly mounted in the frame (2); and, an electrical module (20) mounted for sliding movement in the frame (2) along a path towards and away from the bus bar (22) between a rear first position remote from the bus bar (22) and a front second position proximate thereto;
and an electrical receptacle (26,108,226) on said module (20) connected to electrical circuitry therein, for mating with said bus bar (22) in the second position of said module (20);
and a rigid guide fork (60,112,228) fixed to said receptacle (26,108,226) for guiding said receptacle (26,103,226) into mating relationship with said bus bar (22);
said receptacle (26,108,226) comprising a spring fork contact (26,108,226) for gripping said bus bar (22) and said guide fork (69,112,228) defining a guiding mouth (62,114,282) projecting beyond said spring fork contact (26,108,226) in the direction of movement of said module (20) towards said second position thereof.

2. An assembly as claimed in claim 1, characterised in that said fork contact (26,108,226) projects from, and is integrally formed with, a supporting box structure (40,106), said guide fork (60,112) being formed integrally with, and projecting from, a supporting plate (64,120) which is interengaged with said box structure (40,106), flanges (48,102) on said box structure (40,106) being secured to said supporting plate (64,120).

3. An assembly as claimed in claim 2, characterised in that said supporting box structure (40) is formed with a shoulder (58), said plate being formed with a step (66), said shoulder (58) and said step (66) extending transversely of said direction of movement, said shoulder (58) being in surface-to-surface contact with one side (68) of said step (66), and the other side (70) of said step (66) being in surface-to-surface contact with an edge (72) of a planar mounting member (74) of the module (20) which edge (72) faces the said direction of forward movement.

4. An assembly as claimed in claim 1, characterised in that said fork contact (108) projects forwardly from and is integrally formed with opposed walls (104) of a supporting box structure (106) and mounting flanges (102) project rearwardly in parallel relation from the said pair of opposed walls (104), the guide fork (112) being of channel section with the mouth (114) extending along the channel base and having supporting plates (120) extending rearwardly from respective side walls (116) of the channel section such that the fork contact (108) and supporting box structure (106) can be received within the channel section with the mounting flanges (102) between and adjacent respective supporting plates (120), means being provided to secure the supporting plates (120) and the mounting flanges (102) to an end of a bus bar (110) received between the mounting flanges (102).

5. An assembly as claimed in any one of claims 1-4, characterised by means (74,92,298) supporting said receptacle (26,108,226) and said guide fork (69,112,228) for limited floating movement transversely of said path.

6. An assembly as claimed in claim 1, characterized in that said receptacle (226) is bipartite for making electrical connection to an electrical contact element (237) having a hole (239) therethrough and comprises a pair of metal plates (238) each provided with a through aperture (240) opening into opposite faces (242,244) and with a shaft segment (246) comprising a first portion (245) outstanding from one (244) of said opposite faces (242,244) and having a free end (252) remote therefrom and a second portion (247) forming a segment of the periphery of the aperture (240) in said plate (238), the first portion (245) of each shaft segment being capable of being force fitted into the aperture (240) of the other plate (238), with said first portions (245) of said segments (246) extending through the hole (239) in said contact element (237), whereby said segments (246) cooperate to provide a hollow shaft for receiving a fastener (236) therethrough and the plates (238) are retained in superposed relationship about said contact element (239).

7. An assembly as claimed in claim 6, characterised in that the shaft segment (246) of each plate (238) is of semicircular cross section and is formed integrally with said plate (238), said plates (238) being identical with each other.

8. An assembly as claimed in claim 6 or claim 7, - characterised in that an outer face (248) of the first portion (245) of each shaft segment (246) is tapered in a direction away from said one opposite face (244), the remainder of the periphery (276) of said aperture (240) tapering towards said opposite face (244) and the free longitudinal edges of said first portion (245) being chamfered at the free ends thereof.

## Patentansprüche

1. Verbindungsanordnung für Sammelschienenverbinder mit einem Rahmen (2), einer Sammelschiene (22), die im Rahmen (2) fest montiert ist, und einem elektrischen Modul (20), das für eine gleitende Bewegung im Rahmen (2) entlang einem Weg zur Sammelschiene (22) hin und von dieser weg zwischen einer ersten rückwärtigen Position entfernt von der Sammelschiene (22) und einer zweiten vorderen Position nächst der Sammelschiene (22) montiert ist;
und mit einer elektrischen Buchse (26, 108, 226) an diesem Modul (20), die mit der elektrischen Schaltungsanordnung darin verbunden ist, um mit der Sammelschiene (22) in der zweiten Position des Moduls (20) zusammenzupassen;
und mit einer starten Führungsgabel (60, 112, 228), die an der Buchse (26, 108, 226) befestigt ist, um die Buchse (26, 103, 226) in eine mit der Sammelschiene (22) zusammenpassende Position zu bringen,
wobei die Buchse (26, 108, 226) einen Federgabelkontakt (26, 108, 226) zum Greifen der Sammelschiene (22) aufweist und die Führungsgabel (69, 112, 228) eine Führungsöffinung (62, 114, 282) bildet, die über den Federgabelkontakt (26, 108, 226) in Bewegungsrichtung des Moduls (20) in seine zweite Position hinausragt.

2. Anordnung nach Anspruch 1, **dadurch gekennzeichnet,** daß der Gabelkontakt (26, 108, 226) mit einem Trägergehäusebauteil (40, 106) einstückig geformt ist und von diesem vorragt, daß die Führungsgabel (60, 112) mit einer Trägerplatte (64, 120) einstückig geformt ist und von dieser vortagt, die in gegenseitigem Eingriff mit dem Trägergehäusebauteil (40, 106) steht, und daß Flansche (48, 102) an dem Trägergehäusebauteil (40, 106) an der Trägerplatte (64, 120) befestigt sind.

3. Anordnung nach Anspruch 2, **dadurch gekennzeichnet,** daß das Trägergehäusebauteil (40) mit einer Schulter (58) ausgebildet ist, daß die Platte mit einer Stufe (66) gestaltet ist, wobei die Schulter (58) und die Stufe (66) sich quer zur genannten Bewegungsrichtung erstrecken, daß sich die Schulter (58) in flächigem Kontakt mit einer Seite (68) der Stufe (66) befindet und die andere Seite (70) der Stufe (66) sich in flächigem Kontakt mit einer Kante (72) eines ebenen Montageteiles (74) des Moduls (20) befindet, wobei die Kante (72) in Richtung der Vorwärtsbewegung zeigt.

4. Anordnung nach Anspruch 1, **dadurch gekennzeichnet,** daß der Gabelkontakt (108) mit gegenüberliegenden Wänden (104) eines Trägergehäusebauteils (106) einstückig gestaltet ist und von diesen nach vorne ragt und daß Montageflansche (102) sich nach hinten parallel zu dem Paar gegenüberliegender Wände (104) erstrecken, daß die Führungsgabel (112) einen Kanalquerschnitt hat, wobei sich die Öffnung (114) entlang des Kanalbodens erstreckt, und daß die Führungsgabel Trägerplatten (120) aufweist, die sich von entsprechenden Seitenwänden (116) des Kanalquerschnitts nach hinten erstrecken, so daß der Gabelkontakt (108) und das Trägergehäusebauteil (106) innerhalb des Kanalquerschnitts mit den Montageflanschen (102) zwischen den Trägerplatten (120) und diesen benachbart aufgenommen werden können, und daß Mittel vorgesehen sind, um die Trägerplatten (120) und die Montageflansche (102) an einem Ende einer Sammelschiene (110) zu sichern, die zwischen den Montageflanschen (102) aufgenommen ist.

5. Anordnung nach einem der Ansprüche 1 bis 4, **gekennzeichnet durch** Mittel (74,92, 298), die die Buchse (26, 108, 226) und die Führungsgabel (69, 112, 228) für eine begrenzte schwimmende Bewegung quer zum genannten Weg tragen.

6. Anordnung nach Anspruch 1, **dadurch gekennzeichnet,** daß die Buchse (226) zweiteilig gestaltet ist zur Schaffung einer elektrischen Verbindung mit einem elektrischen Kontaktelement (237) mit einer durchgehenden Öffnung (239), daß sie ein Paar Metallplatten (238) enthält, die jeweils mit einer durchgehenden Öffnung (240), welche sie auf die Gegenseite (242, 244) hin öffnet, und mit einem Schaftsegment (246) versehen sind, welches einen ersten Abschnitt (245) aufweist, der von einer (244) der gegenüberliegenden Seiten (242, 244) hervorsteht und ein freies Ende (252) entfernt davon aufweist, wobei ein zweiter Abschnitt (247) ein Segment des Umfangs der Öffnung (240) in der Platte (238) darstellt, wobei der erste Abschnitt (245) jedes Schaftsegments geeignet ist für einen Preßsitz in der Öffnung (240) der anderen Platte (238), wobei die ersten Abschnitte (245) der Segmente (246) sich durch die Öffnung (239) im Kontaktelement (237) erstrecken, wodurch die Segmente (246) zusammenwirken, um einen hohlen Schaft zur Aufnahme eines hindurchgehenden Befestigungsmittels (236) zu bilden und die Platten (238) in übereinanderlagernder Weise um das Kontaktelement (239) herum festgehalten werden.

7. Anordnung nach Anspruch 6, **dadurch gekennzeichnet,** daß das Schaftsegment (246) jeder Platte (238) einen halbkreisförmigen Querschnitt aufweist und einstückig mit der Platte (238) ausgebildet ist, wobei die Platten (238) zueinander identisch sind.

8. Anordnung nach Anspruch 6 oder 7, **dadurch gekennzeichnet,** daß eine äußere Fläche (248) des ersten Abschnitts (245) eines jeden Schaftsegments (246) sich entfernend von der einen gegenüberliegenden Fläche (244) verjüngt, daß der Rest des Umfangs (276) der Öffnung (240) sich in Richtung zur gegenüberliegenden Fläche (244) verjüngt und daß die freien Längskanten des ersten Abschnitts (245) an ihren freien Enden abgeschrägt sind.

## Revendications

1. Assemblage d'un connecteur pour barre omnibus comportant un châssis (2) ; une barre omnibus (22) montée fixement dans le châssis (2) ; et un module électrique (20) monté de façon à effectuer un mouvement coulissant dans le châssis (2) le long d'un trajet le rapprochant et l'éloignant de la barre omnibus (22) entre une première position arrière éloignée de la barre omnibus (22) et une seconde position avant proche de cette barre ;
et une fiche femelle électrique (26, 108, 226) sur ledit module (20), connectée à des circuits électriques contenus dans ce module, pour s'accoupler avec ladite barre omnibus (22) dans la seconde position dudit module (20) ;
et une fourchette rigide (60, 112, 228) de guidage fixée à ladite fiche femelle (26, 108, 226) pour guider ladite fiche femelle (26, 103, 226) jusque dans une disposition d'accouplement avec ladite barre omnibus (22) ;
ladite fiche femelle (26, 108, 226) comportant un contact en fourche à ressort (26, 108, 226) destiné à pincer ladite barre omnibus (22) et ladite fourchette de guidage (69, 112, 228) définissant une embouchure de guidage (62, 114, 282) faisant sailie au-delà dudit contact à fourchette à ressort (26, 108, 226) dans la direction du mouvement dudit module (20) vers sa seconde position.

2. Assemblage selon la revendication 1, caractérisé en ce que ledit contact à fourchette (26, 108, 226) fait saillie d'une structure (40, 106) de support en caisson avec laquelle il est réalisé d'une seule pièce, ladite fourchette de guidage (60, 112) étant réalisée d'une seule pièce avec une plaque (64, 120) de support, de laquelle il fait saillie, qui est enclenchée avec ladite structure en caisson (40, 106), des brides (48,102) sur ladite structure en caisson (40, 106) étant fixées à ladite plaque de support (64, 120).

3. Assemblage selon la revendication 2, caractérisé en ce que ladite structure de support (40) en caisson est formée avec un épaulement (58), ladite plaque étant formée avec un ressaut (66), ledit épaulement (58) et ledit ressaut (66) s'étendant transversalement à ladite direction de mouvement, ledit épaulement (58) étant en contact surface contre surface avec un côté (58) dudit ressaut (66), et l'autre côté (70) dudit ressaut (66) étant en contact surface contre surface avec un bord (72) d'un élément plan (74) de montage du module (20), lequel bord (72) fait face à ladite direction de mouvement vers l'avant.

4. Assemblage selon la revendication 1, caractérisé en ce que ledit contact à fourchette (108) fait saillie vers l'avant de parois opposées (104), avec lesquelles il est réalisé d'une seule pièce, d'une structure (106) de support en forme de caisson et des brides (102) de montage font saillie vers l'arrière, dans une disposition parallèle, de ladite paire de parois opposées (104), la fourchette (112) de guidage étant d'une section en gouttière avec l'embouchure (114) s'étendant le long de la base de la gouttière et ayant des plaques (120) de support qui s'étendent vers l'arrière depuis des parois latérales respectives (106) de la section en gouttière afin que le contact (108) en fourchette et la structure (106) de support en caisson puissent être reçus dans la section en gouttière, les brides (102) de montage étant situées entre des plaques respectives (120) de support, auxquelles elles sont adjacentes, des moyens étant prévus pour fixer les plaques (120) de support et les brides (102) de montage à une extrémité d'une barre omnibus (110) reçue entre les brides (102) de montage.

5. Assemblage selon l'une quelconque des revendications 1 à 4, caractérisé par des moyens (74, 92, 298) supportant ladite fiche femelle (26, 108, 226) et ladite fourchette de guidage (69, 112, 228) pour un mouvement flottant limité transversalement audit trajet.

6. Assemblage selon la revendication 1, caractérisé en ce que ladite fiche femelle (226) est en deux parties pour réaliser une connexion électrique avec un élément de contact électrique (237) traversé d'un trou (239) et comporte deux plaques métalliques (238) traversées chacune d'une ouverture (240) débouchant dans des faces opposées (242, 244), un segment de tige (246) comprenant une première partie (245) qui fait saillie de l'une (244) desdites faces opposées (242, 244) et qui présente une extrémité libre (252) qui en est éloignée, et une seconde partie (247) formant un segment de la périphérie de l'ouverture (240) dans ladite plaque (238), la première partie (245) de chaque segment de tige pouvant être ajustée à force dans l'ouverture (240) de l'autre plaque (238), lesdites premières parties (245) desdits segments (246) passant dans le trou (239) dudit élément de contact (237), grâce à quoi lesdits segments (246) coopèrent pour former une tige creuse destinée à recevoir un organe de fixation (236) et les plaques (238) sont retenues dans une disposition superposée autour dudit élément de contact (239).

7. Assemblage selon la revendication 6, caractérisé en ce que le segment de tige (246) de chaque plaque (238) est d'une section transversale semi-circulaire et est réalisé d'une seule pièce avec ladite plaque (238), lesdites plaques (238) étant identiques entre elles.

8. Assemblage selon la revendication 6 ou la revendication 7, caractérisé en ce qu'une face extérieure (248) de la première partie (245) de chaque segment de tige (246) est inclinée dans une direction s'éloignant de ladite face (244) faisant partie des faces opposées (242, 244), la partie restante de la périphérie (276) de ladite ouverture (240) étant inclinée vers ladite face opposée (244) et les bords longitudinaux libres de ladite première partie (245) étant chanfreinés à leurs extrémités libres.
